Europäisches Patentamt

European Patent Office

Office européen des brevets

(19)

(11) **EP 1 401 133 A1**

(12) **EUROPEAN PATENT APPLICATION**
published in accordance with Art. 158(3) EPC

(43) Date of publication:
**24.03.2004 Bulletin 2004/13**

(51) Int Cl.⁷: **H04J 11/00**, H04B 1/707

(21) Application number: **02738843.8**

(22) Date of filing: **28.06.2002**

(86) International application number:
**PCT/JP2002/006535**

(87) International publication number:
**WO 2003/003634 (09.01.2003 Gazette 2003/02)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **29.06.2001 JP 2001199925**
**20.12.2001 JP 2001388235**

(71) Applicant: **MATSUSHITA ELECTRIC INDUSTRIAL CO., LTD.**
**Kadoma-shi, Osaka 571-8501 (JP)**

(72) Inventors:
• **SUMASU, Atsushi**
**Yokosuka-shi, Kanagawa 238-0013 (JP)**
• **SUDO, Hiroaki**
**Yokohama-shi, Kanagawa 224-0045 (JP)**
• **MIYOSHI, Kenichi**
**Kanazawa-ku, Yokohama-shi, Kanagawa 236- (JP)**

(74) Representative: **Grünecker, Kinkeldey,**
**Stockmair & Schwanhäusser Anwaltssozietät**
**Maximilianstrasse 58**
**80538 München (DE)**

(54) **MULTICARRIER TRANSMITTER&comma; MULTICARRIER RECEIVER&comma; AND MULTICARRIER WIRELESS COMMUNICATION METHOD**

(57)  The pilot signal generation section 103 generates pilot signals in such a way that the pilot signals have a predetermined time-varying pattern on pilot carriers. The pilot signal insertion section 104 allows the pilot carriers to carry only pilot signals. The apparatus on the receiving side carries out channel estimation by correlating the plurality of pilot signals carried on the pilot carriers with the same pattern as that used on the transmitting side. Furthermore, the apparatus on the transmitting side sends pilot signals having a time-varying pattern carried on subcarriers involving DC components which would not be used for information transmission by conventional multicarriers. This makes it possible to improve the transmission efficiency in a radio communication based on a multicarrier modulation system.

FIG.1

EP 1 401 133 A1

## Description

Technical Field

The present invention relates to a transmission apparatus, reception apparatus and radio communication method for carrying out radio communications based on a multicarrier modulation system such as an OFDM (Orthogonal Frequency Division Multiplexing) modulation system used for a digital communication system.

Background Art

Radio communications, andmoreparticularly, mobile communications in recent years handle not only voice but also various types of information such as image and data as transmission targets. Since demands for transmission of various contents are expected to further increase in the future, a demand for high reliability and high-speed transmission is expected to increase all the more. However., when high-speed transmission is carried out in a mobile communication, influences of delayed waveforms due to multipaths can no longer be ignored and its transmission characteristic deteriorates due to frequency-selective fading.

As one of technologies providing frequency-selective fading control, anMC (multicarrier) modulation system is a focus of attention. The multicarrier modulation system is a technology for transmitting data using a plurality of carriers (subcarriers) whose transmission speed is suppressed to such an extent that no frequency-selective fading occurs, thus consequently providing high-speed transmission.

An OFDM modulation system in particular is a system with the highest frequency utilization efficiency among multicarrier modulation systems where a plurality of subcarriers carrying data is orthogonal to one another and can be implemented in a relatively simple hardware configuration, and therefore it is a focus of attention and under study from various angles.

According to an MC modulation system based on the OFDM modulation system, the transmitting side sends pilot signals so that the receiving side can perform channel estimation, etc. Accurate channel estimation requires a process of averaging channel estimated values using a plurality of pilot signals to suppress noise components.

However, a conventional MC modulation system requires many pilot signals to obtain desired accuracy of channel estimation, which prevents the conventional MC modulation system from sending data signals corresponding thereto, resulting in deterioration of the transmission efficiency.

As disclosed in the Unexamined Japanese Patent Publication No.HEI 11-205276, according to a radio communication based on the conventional MC modulation system, subcarriers involving DC components only carry signals that need not be decoded such as peak suppression signals and are not used to transmit pilot signals or information signals. This is because the subcarriers involving DC components suffer deterioration of the decoding accuracy due to influences of DC offsets generated in analog circuits such as a D/A converter and A/D converter and fails to carry out accurate channel estimation. Thus, avoiding the use of subcarriers to which DC component are applied for information transmission results in deterioration of the transmission efficiency.

Disclosure of Invention

It is an object of the present invention to provide a multicarrier transmission apparatus, multicarrier reception apparatus and multicarrier radio communication method capable of improving the transmission efficiency in radio communications based on the MC modulation system by improving a method of transmitting pilot signals and improving a method of carrying out channel estimation.

This object is attained by an apparatus on the transmitting side sending pilot signals having a time-varying pattern carried on a pilot carrier and an apparatus on the receiving side carrying out channel estimation by correlating among a plurality of pilot signals which are carried on the pilot carrier and received in time sequence.

Brief Description of Drawings

FIG.1 is a block diagram showing a configuration of a transmission apparatus according to Embodiment 1 of the present invention;

FIG.2 illustrates an array of data signals and pilot signals of a signal string output from a pilot signal insertion section of the transmission apparatus according to Embodiment 1 of the present invention;

FIG.3 is a block diagram showing a configuration of a reception apparatus according to Embodiment 1 of the present invention;

FIG.4 illustrates pilot signals used at a channel estimation section of the reception apparatus according to Embodiment 1 of the present invention;

FIG.5 is a block diagram showing a configuration of a second reception apparatus according to Embodiment 1 of the present invention;

FIG.6 is a block diagram showing a configuration of a transmission apparatus according to Embodiment 3 of the present invention;

FIG.7 is a block diagram showing a configuration of a reception apparatus according to Embodiment 3 of the present invention;

FIG.8 illustrates values of a correlation between signals of the present invention and extracted pilot signals;

FIG.9 is a block diagram showing a configuration of a transmission apparatus according to Embodiment 4 of the present invention;

FIG.10 is a block diagram showing a configuration of a reception apparatus according to Embodiment 4 of the present invention;

FIG.11 is a block diagram showing a configuration of a transmission apparatus according to Embodiment 5 of the present invention; and

FIG.12 is a block diagram showing a configuration of a reception apparatus according to Embodiment 5 of the present invention.

Best Mode for Carrying out the Invention

With reference now to the attached drawings, embodiments of the present invention will be explained below.

(Embodiment 1)

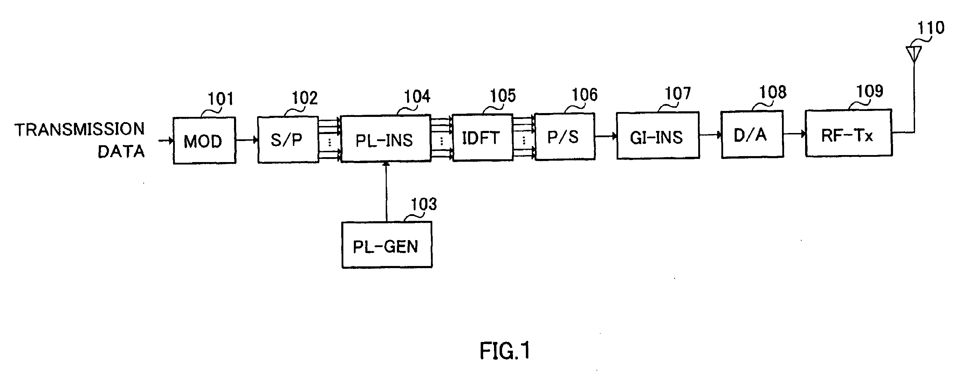

The configuration of a transmission apparatus according to Embodiment 1 will be explained using the block diagram in FIG.1. The transmission apparatus according to this embodiment is constructed of a digital modulation section (MOD) 101, an S/P (serial/parallel) conversion section 102, a pilot signal generation section (PL-GEN) 103, a pilot signal insertion section (PL-INS) 104, an IDFT (Inverse Fourier Transform) section 105, a P/S (parallel/serial) conversion section 106, a guard interval insertion section (GI-INS) 107, a D/A (digital/analog) conversion section 108, a radio transmission section (RF-Tx) 109 and an antenna 110.

The digital modulation section 101 performs predetermined modulation such as QPSK on transmission data and outputs the modulated signal to the S/P conversion section 102. The S/P conversion section 102 converts the modulated signal, which is a serial data string to parallel data strings to be carried on subcarriers.

The pilot signal generation section 103 generates pilot signals and outputs them to the pilot signal insertion section 104. The pilot signal insertion section 104 inserts the pilot signals generated by the pilot signal generation section 103 into the output signal of the S/P conversion section 102 as appropriate. In this case, the pilot signal insertion section 104 allows at least one subcarrier to carry only pilot signals. The method of generating pilot signals by the pilot signal generation section 103 and the method of inserting the pilot signals by the pilot signal insertion section 104 will be described in detail later.

The IDFT section 105 applies Inverse Fourier transform to the output signal of the pilot signal insertion section 104 and outputs to the P/S conversion section 106. The P/S conversion section 106 converts the output signal of the IDFT section 105 that is parallel data strings to a serial string and outputs to the guard interval insertion section 107. The guard interval insertion section 107 divides the output signal of the P/S conversion section 106 into symbols and carries out processing of adding the same signal as a section corresponding to a predetermined length from the back end of each symbol (guard interval assignment processing). The D/A conversion section 108 converts the output signal which is a digital signal string of the guard interval insertion section 107 to an analog signal and outputs to the radio transmission section 109. The radio transmission section 109 carries out predetermined radio processing such as amplification and up-conversion on a baseband signal output from the D/A conversion section 108 and sends the baseband signal by radio from the antenna 110.

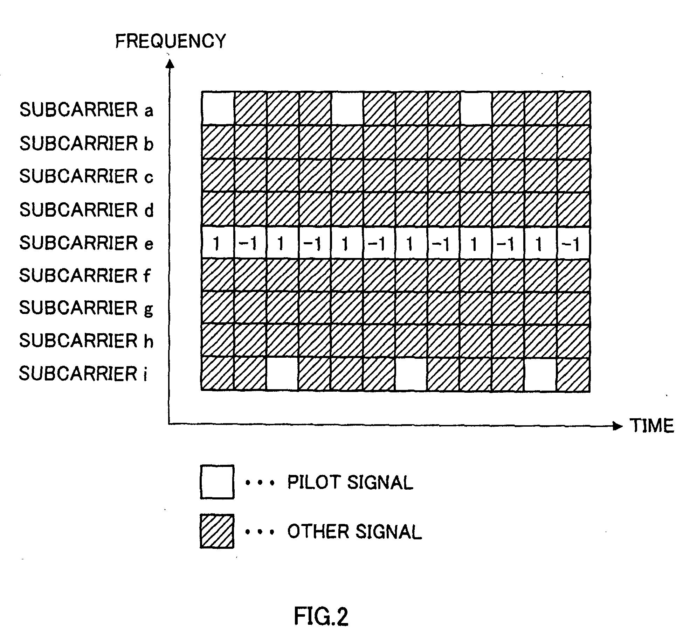

Then, the method of generating pilot signals by the pilot signal generation section 103 and the method of inserting the pilot signals by the pilot signal insertion section 104 will be explained in detail using FIG.2. FIG. 2 shows an array of data signals and pilot signals of the signal string output from the pilot signal insertion section 104.

FIG.2 shows a case where signals area carried by 9 subcarriers a to i. The pilot signal insertion section 104 allows the subcarrier e to carry only pilot signals. Furthermore, the pilot signal insertion section 104 also inserts pilot signals into data signals of other subcarriers such as the subcarriers a and i as appropriate.

The pilot signal generation section 103 generates pilot signals having a time-varying pattern in such a way that pilot signals "1" and pilot signals "-1" appear alternately as "1,-1,1,-1,1,-1,···".

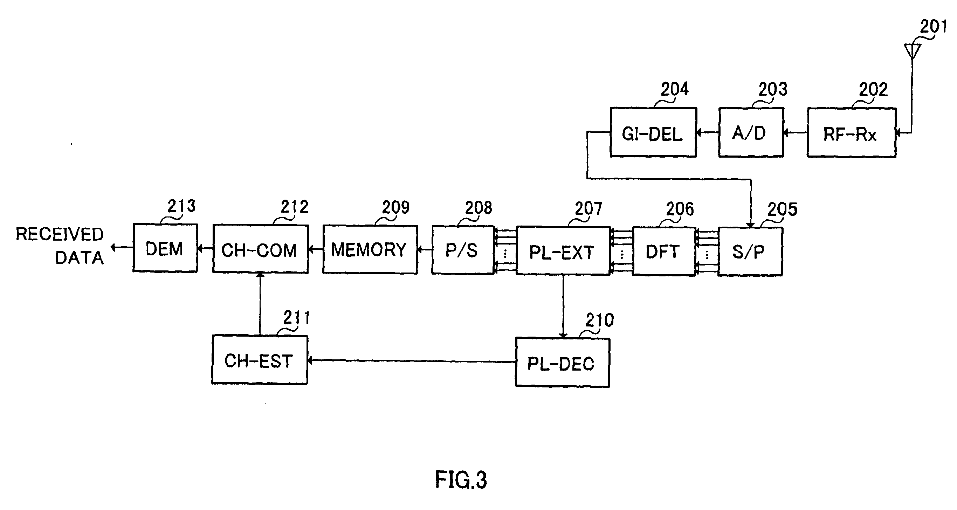

Then, the configuration of the reception apparatus according to Embodiment 1 of the present invention will be explained using the block diagram in FIG.3. The reception apparatus according to this embodiment is constructed of an antenna 201, a radio reception section (RF-Rx) 202, an A/D (analog/digital) conversion section 203, a guard interval deletion section (GI-DEL) 204, an S/P conversion section 205, a DFT (Fourier Transform) section 206, a pilot signal extraction section (PL-EXT) section 207, a P/S conversion section 208, a memory 209, a pilot signal decoding section (PL-DEC) 210, a channel estimation section (CH-EST) 211, a channel compensation section (CH-COM) 212 and a digital demodulation section (DEM) 213.

The radio reception section (RF-Rx) 202 applies predetermined radio processing such as amplification and down-conversion on the radio signal received by the antenna 201 and outputs the signal as a baseband signal to the A/D conversion section 203. The A/D conversion section 203 converts the analog baseband signal output from the radio reception section 202 to a digital signal and outputs to the guard interval deletion section 204. The guard interval deletion section 204 removes a guard interval section from the output signal of the A/D conversion section 203 and outputs to the S/P conversion section 205. The S/P conversion section 205 converts the output signal of the guard interval deletion section 204 from serial to parallel and outputs to the DFT section 206. The DFT section 206 converts the output signal of the S/P conversion section 205 to components for various subcarriers through a Fourier Transform and outputs to the pilot signal extraction section 207.

The pilot signal extraction section 207 extracts pilot signals from the output signal of the DFT section 206, outputs to the pilot signal decoding section 210 and outputs the remaining data signal to the P/S conversion section 208. The P/S conversion section 208 converts the data signal output from the pilot signal extraction section 207 which is a parallel data string to a serial data string and stores in the memory 209 temporarily.

The pilot signal decoding section 210 decodes the pilot signals output from the pilot signal extraction section 207 by finding a correlation using the same pattern as that used on the transmitting side and outputs the decoded pilot signals to the channel estimation section 211. The channel estimation section 211 estimates a channel using a plurality of time-sequential pilot signals decoded by the pilot signal decoding section 210 and outputs the channel estimated value to the channel compensation section 212. The method of channel estimation of pilot carriers by the channel estimation section 211 will be described in detail later.

The channel compensation section 212 compensates the data signal stored in the memory 209 for channel distortion based on the channel estimated value output from the channel estimation section 211 and outputs the data signal after the channel distortion compensation to the digital demodulation section 213. The digital demodulation section 213 demodulates the output signal of the channel compensation section 212 and obtains received data.

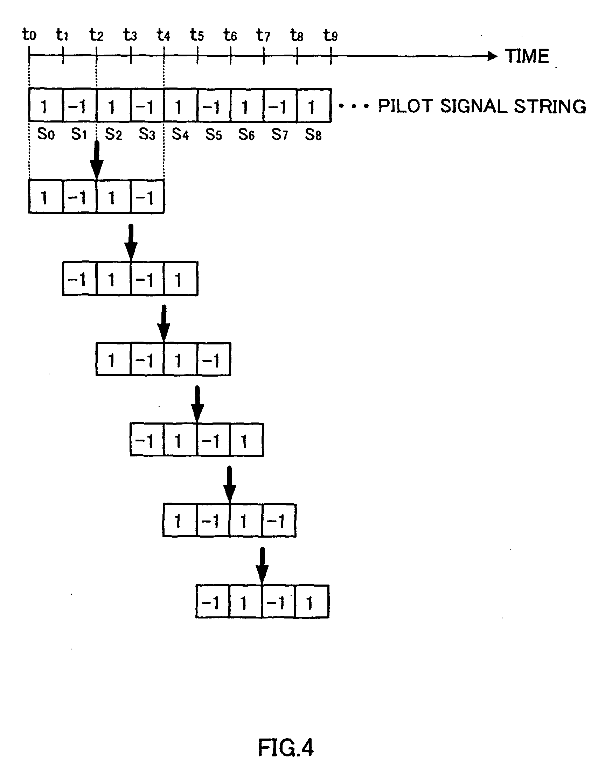

Then, the method of channel estimation of pilot carriers by the channel estimation section 211 will be explained using FIG.4. FIG.4 illustrates pilot signals used by the channel estimation section 211 at various timings.

In the case of FIG.4, for example, symbol S0 is decoded in a time period t0 to t1. Then, the decoding of pilot signals corresponding to four symbols S0 to S3 is completed at time t4. The channel estimation section 211 carries out correlation processing on pilot signals of the four symbols S0 to S3 decoded in the time period t0 to t4 to calculate a channel estimated value. This channel estimated value is the value at time t2, which is a central value in the time period 10 to t4. Furthermore, the channel estimation section 211 carries out correlation processing on pilot signals of four symbols S1 to S4 decoded in a time period of t1 to t5 to calculate a channel estimated value. This channel estimated value is the value at time t3, which is a central value in the time period t1 to t5. Hereinafter, the channel estimation section 211 carries out correlation processing on pilot signals of four symbols at intervals of one symbol sequentially.

Since the channel estimated values obtained in this way are based on pilot signals of a plurality of symbols (four symbols in the case of FIG.4), noise components are suppressed compared to the case where channel estimated values are obtained based on a pilot signal of one symbol and therefore the accuracy improves. Furthermore, the improved accuracy leads to a reduction of the number of pilot signals and improvement of the transmission efficiency. Then, it is possible to obtain a channel estimated value of the data section by interpolating the channel estimated value calculated in this way and channel estimated values of other subcarriers.

This embodiment has described the case where pilot signals are generated in such a way that pilot signals "1" and pilot signals "-1" are alternated on subcarrier e, but the present invention is not limited to this and it is possible to obtain similar effects if pilot signal patterns are known to both the transmitting side and receiving side.

Furthermore, this embodiment has described the case where pilot signals having time-varying patterns are assigned to only one subcarrier, but the present invention is not limited to this, it is possible to arrange pilot signals having time-varying patterns on a plurality of subcarriers, obtain channel estimated values for the respective subcarriers and obtain channel estimated values for the data section by mutually interpolating those channel estimated values.

Furthermore, this embodiment has described the case where pilot signal patterns are sent in time sequence, but the present invention is not limited to this, and it is also possible to perform channel estimation if at least pilot signal patterns are arranged in time sequence and the receiving side is aware of timing at which pilot signals are inserted although pilot signal patterns are not sent consecutively in time sequence. This method is especially effective when channel variations occur slowly and subcarriers with which pilot signals are sent can send information data at timing at which pilot signals are not sent, which can further improve the transmission efficiency.

Furthermore, in FIG.4, channel estimated values at time t0 and time t1 can be calculated through extrapolation, and therefore it is also possible to perform channel estimation and compensation for symbols S0 and S1.

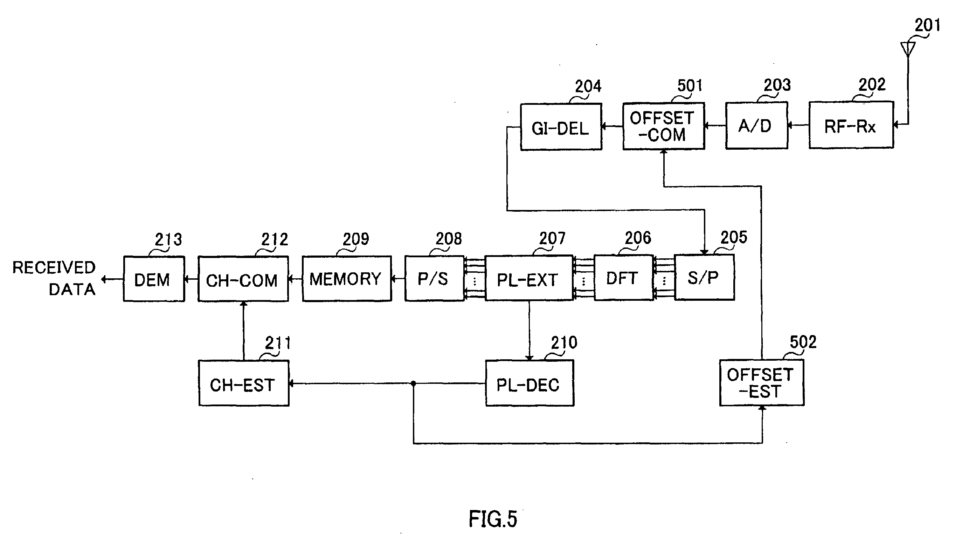

Furthermore, it is also possible to estimate frequency offsets using these pilot signals arranged in time sequence. FIG.5 is a block diagram showing a configuration of a second reception apparatus according to this embodiment and is intended to estimate frequency offsets using pilot signals. When compared to FIG.3, the reception apparatus shown in FIG.5 adopts a configuration with a frequency offset compensation section (OFFSET-COM) 501 and frequency offset estimation section (OFFSET-EST) 502 added.

In FIG. 5, a pilot signal decoding section 210 outputs decoded pilot signals to a channel estimation section 211 and frequency offset estimation section 502. The frequency offset estimation section 502 estimates a frequency offset value using the decoded pilot signal and outputs the estimation result to the frequency offset compensation section 501.

An A/D conversion section 203 converts an analog baseband signal output from a radio reception section 202 to a digital signal and outputs to the frequency offset compensation section 501. The frequency offset compensation section 501 compensates for a frequency offset value included in an output signal of the A/D conversion section 203 based on the estimation result of the frequency offset estimation section 502 and outputs to a guard interval deletion section 204.

Since the frequency offset value calculated from the frequency offset estimation section 502 is based on pilot signals of a plurality of symbols, its noise component is reduced compared to the case where the frequency offset value is calculated based on a one-symbol pilot signal. Furthermore, since the accuracy is improved, it is possible to reduce the number of pilot signals and improve the transmission efficiency. Thus, the frequency offset value of the data section can be obtained by averaging the frequency offset value calculated in this way and frequency offset values of other subcarriers. Furthermore, carrying out this frequency offset estimation and compensation not only once but repeating many times will reduce the influence from a frequency offset of the output signal of the DFT section 206 and thereby improve the characteristic.

(Embodiment 2)

Here, in a radio communication according to a conventional MC modulation system, subcarriers involving DC components are not used to transmit pilot signals or information signals. This is because the decoding accuracy of the subcarriers involving DC components deteriorates due to influences of a DC offset produced in an analog circuit such as a D/A converter and A/D converter and it is not possible to carry out accurate channel estimation.

On the other hand, when the numbers of positive and negative pilot signals are the same (integrated value becomes 0) within a predetermined range such as "1,-1,1, -1, ⋯) as explained in above Embodiment 1, the pilot signals are cancelled out in the process of calculating a correlation value even if there are some DC offsets, and therefore the correlation value does not change irrespective of whether there are DC offsets or not.

This will be explained below. Suppose a case where a pilot signal string having a pattern of "1,-1,1,-1" is carried on a subcarrier involving a DC component as an example. When there is no DC offset, the received signal on the receiving side during decoding is "1,-1,1,-1", and therefore the correlation value with the pilot signal string is given as:

$$1 \times 1 + (-1) \times (-1) + 1 \times 1 + (-1) \times (-1) = 4$$

Furthermore, when there is a DC offset of "+0.5", the received signal on the receiving side during decoding is "1.5, -0.5, 1.5, -0.5" and a correlation with the pilot signal is given as:

$$1.5 \times 1 + (-0.5) \times (-1) + 1.5 \times 1 + (-0.5) \times (-1) = 4$$

Thus, according to this embodiment, correlation values become identical irrespective of whether there are DC offsets or not, and therefore even if pilot signals are sent using subcarriers involving DC components, the receiving side can decode them without influences from the DC offsets. Therefore, the number of pilot signals transmitted through other subcarriers can be reduced and sending data signals corresponding thereto makes it possible to improve the transmission efficiency.

(Embodiment 3)

In a communication system using OFDM here, it is possible to think of a case where a plurality of OFDM symbols that are consecutively sent in time sequence is handled as one unit (frame) and pilot signals are sent or data is sent in the frame on a time-division basis. In such a communication system, it is necessary to detect the start position of the frame during initial synchronization.

Embodiments 1 and 2 above have explained the case where channel estimation is carried out using pilot signals having a time-varying pattern, but these pilot signals can also be used to acquire frame synchronization to detect the start of the frame during initial synchronization. Embodiment 3 will describe a case where frame synchronization is acquired using pilot signals having a time-varying pattern.

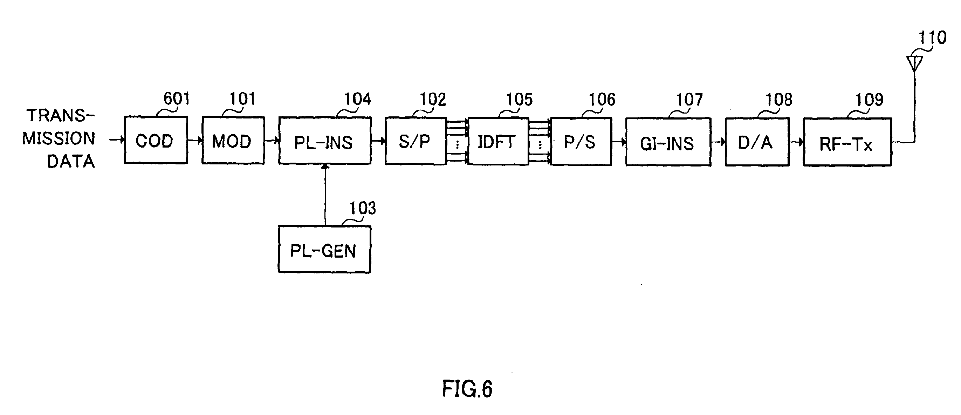

FIG.6 is a block diagram showing a configuration of a transmission apparatus according to this embodiment intended to acquire frame synchronization using pilot signals. Compared to FIG.1, the transmission apparatus shown in FIG. 6 adopts a configuration with a data coding section (COD) 601 for carrying out coding on transmission data added. In FIG.6, a pilot signal insertion section 104 inserts pilot signals generated by a pilot signal generation section 103 into the output signal of a digital modulation section 101 as appropriate and outputs to an S/P conversion section 102.

In this case, the pilot signal generation section 103 generates pilot signals having a time-varying pattern in the same cycle as that of the frame. For example, when a frame is constructed of 32 OFDM symbols, a

pilot signal string $\{C_1, C_2, C_3, \cdots, C_{32}\}$ of 32 in length is used for frame synchronization. Each element of the string is assigned to a predetermined subcarrier of each OFDM symbol one at a time and repeated for every one frame.

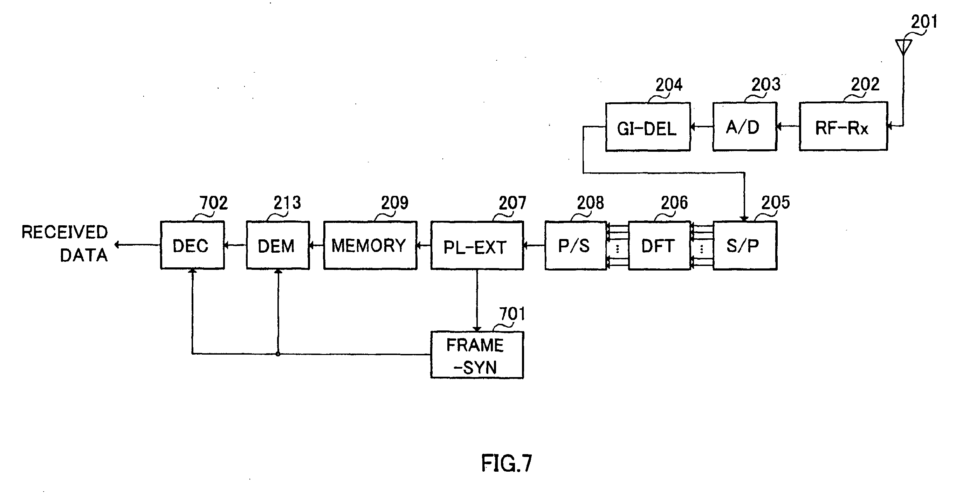

FIG.7 is a block diagram showing a configuration of a reception apparatus according to this embodiment intended to acquire frame synchronization using pilot signals. Compared to FIG.3, the reception apparatus shown in FIG.7 adopts a configuration with a frame synchronization acquisition section (FRAME-SYN) 701 and a data decoding section (DEC) 702 added. In FIG. 7, a P/S conversion section 208 converts the output signal of a DFT section 206 which is a parallel data string to a serial data string and a pilot signal extraction section 207 extracts a pilot signal. Furthermore, for simplicity of explanation, FIG.7 omits a pilot signal decoding section 210, a channel estimation section 211 and a channel compensation section 212.

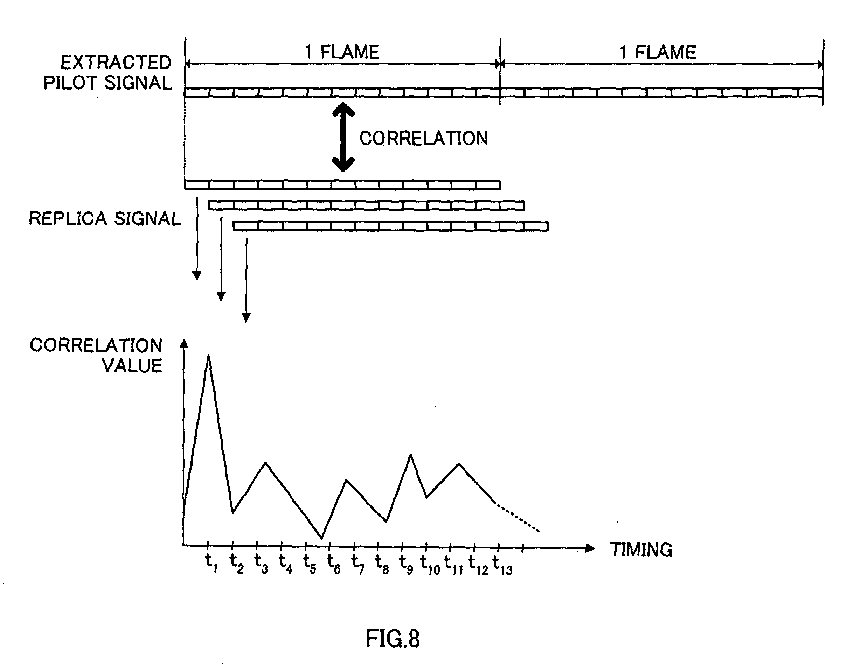

While shifting a replica signal which is stored inside beforehand by 1 OFDM symbol at a time, the frame synchronization acquisition section 701 calculates a value of correlation with a 1-frame pilot signal extracted by the pilot signal extraction section 207 and identifies the timing at which the correlation value reaches a maximum (t1 in the case of FIG.8) as the start of the frame. This makes it possible to acquire frame synchronization. Then, the frame synchronization acquisition section 701 outputs a timing signal indicating the start of the frame to a digital demodulation section 213 and the data decoding section 702.

The digital demodulation section 213 decides data break positions based on the timing signal output from the frame synchronization acquisition section 701 and demodulates the output signal of a memory 209. The data decoding section 702 decides data break positions based on the timing signal output from the frame synchronization acquisition section 701 and decodes the output signal of the digital demodulation section 213 to obtain received data.

Thus, according to this embodiment, the transmitting side sends pilot signals having a time-varying pattern in the same cycle as that of the frame to allow the receiving side to acquire frame synchronization. Furthermore, this embodiment uses a frame as a transmission unit, but the present invention is not limited to this and for other transmission units, it is also possible for the transmitting side to send pilot signals having a time-varying pattern in the same cycle as that of the transmission unit so that the receiving side can acquire synchronization in the corresponding transmission unit.

Furthermore, the transmitting side generates the same number of positive pilot signals as negative pilot signals in the same cycle as that of the frame and sends them on subcarriers involving DC components as in the case of Embodiment 2 so that the receiving side can decode them without influences of DC offsets. This makes it possible to reduce the number of pilot signals sent with other subcarriers, and thereby improve the transmission efficiency by sending data signals corresponding thereto.

(Embodiment 4)

As a technology for providing frequency selective fading control, there is a spread spectrum system in addition to the MC modulation system. The spread spectrum system is a system for improving interference resistance by spreading signals on the frequency axis using a spreading code called "PN code" and thereby obtaining spreading gain. The spread spectrum system can be divided into two types; a direct spreading system and a frequency hopping system. It is decided that a CDMA system using the direct spreading system in particular will be adopted for the IMT-2000, a next-generation mobile communication.

Then, an MC-CDMA system which combines the MC modulation system and CDMA system is becoming a focus of attention recently. The present invention is applicable to the MC-CDMA system. Embodiment 4 will describe the case where channel estimation is carried out by applying the present invention to the MC-CDMA system.

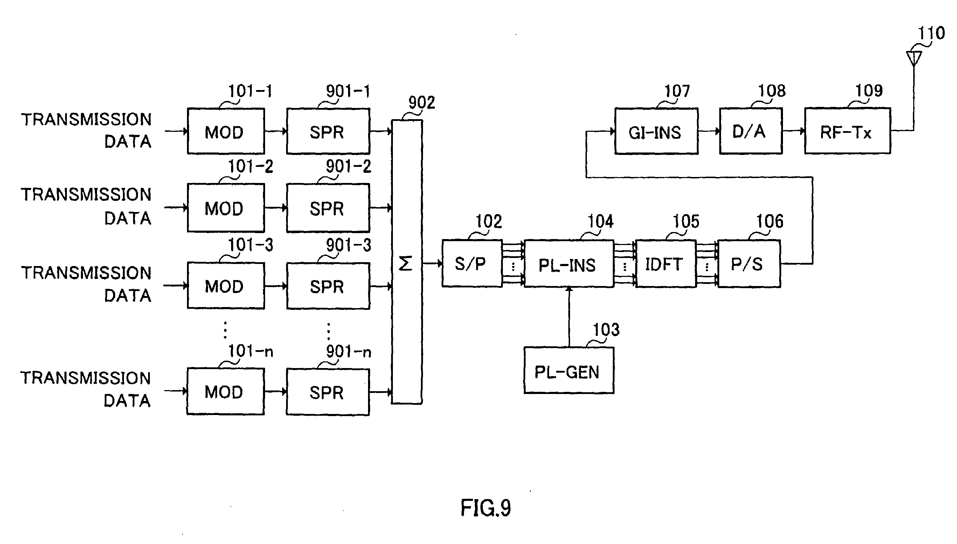

FIG.9 is a block diagram showing a configuration of a transmission apparatus according to Embodiment 4 of the present invention and indicates a case where the present invention is applied to the MC-CDMA system. In the transmission apparatus shown in FIG. 9, the components common to those in FIG.1 are assigned the same reference numerals and explanations thereof will be omitted. Compared to FIG.1, the transmission apparatus shown in FIG.9 adopts a configuration including a plurality of digital modulation sections 101-1 to 101-n (n is a natural number equal to or greater than 2) and with a plurality of spreading sections (SPR) 901-1 to 901-n and a multiplexing section 902 added.

The spreading sections 901-1 to 901-n spread output signals of their respective digital modulation sections 101-1 to 101-n and output to the multiplexing section 902. The multiplexing section 902 multiplexes the output signals of the spreading sections 901-1 to 901-n and outputs to an S/P conversion section 102. The S/P conversion section 102 converts the output signal of the multiplexing section 902 to a parallel data string chip by chip.

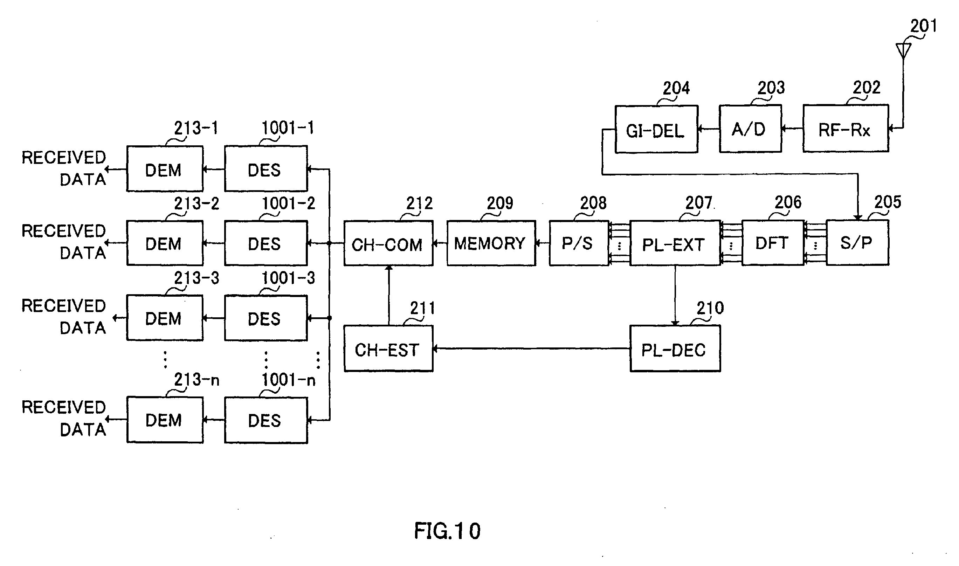

FIG.10 is a block diagram showing a configuration of a reception apparatus according to this embodiment and indicates a case where the present invention is applied to an MC-CDMA system. In the reception apparatus shown in FIG.10, the components common to those in FIG.3 are assigned the same reference numerals as those in FIG.3 and explanations thereof will be omitted. Compared to FIG.3, the reception apparatus shown in FIG.10 adopts a configuration including a plurality of digital demodulation sections 213-1 to 213-n (n is a natural number equal to or greater than 2) and with a plurality of despreading sections (DES) 1001-1 to 1001-n added.

The despreading sections 1001-1 to 1001-n carry out despreading processing on the output signal of a channel compensation section 212 using specific spreading codes and output to the corresponding digital demodulation sections 213-1 to 213-n. The digital demodulation sections 213-1 to 213-n demodulate the output signals of their respective despreading sections 1001-1 to 1001-n and obtain received data.

Here, by allowing pilot carriers to carry cell identification signals, this embodiment can support a multi-cell system using the same frequency band. Furthermore, by adopting pattern strings for pilot carrier signal strings, which are orthogonal to one another between neighboring cells, this embodiment can extract only pilot signals of the own cell and thereby perform channel estimation more accurately.

Furthermore, by spreading pilot signals also in the frequency direction, this embodiment can perform channel estimation more accurately through spreading gain. Furthermore, this embodiment can also estimate frequency offsets using pilot signals.

(Embodiment 5)

Embodiment 5 will describe a case where frame synchronization is acquired by applying the present invention to an MC-CDMA system.

A communication system using an MC-CDMA system may also handle a plurality of MC-CDMA symbols which are sent consecutively in time sequence as one unit (frame), send pilot signals and send data in a frame on a time-division basis. In such a communication system, it is necessary to detect the start position of the frame during initial synchronization.

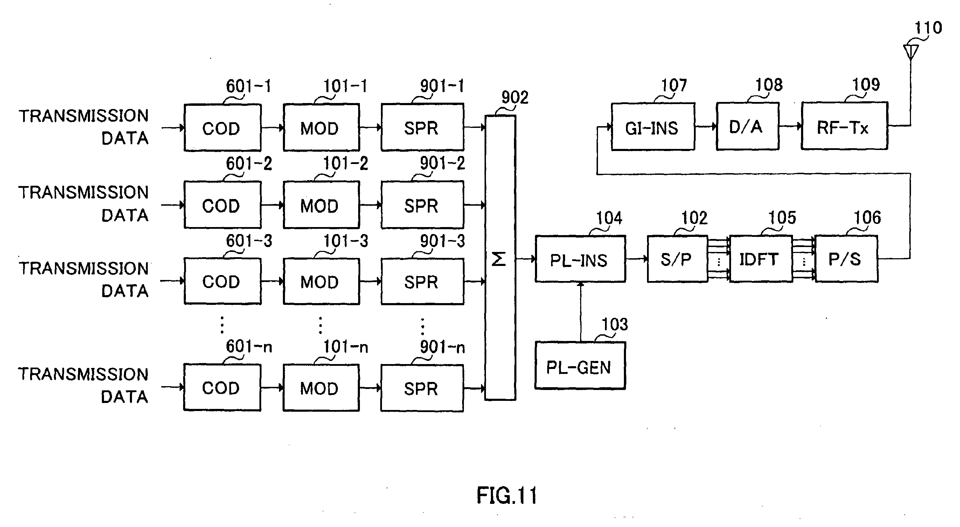

FIG.11 is a block diagram showing a configuration of a transmission apparatus according to Embodiment 5 of the present invention and indicates a case where the present invention is applied to an MC-CDMA system. Compared to FIG.9, the transmission apparatus shown in FIG.11 adopts a configuration with data coding sections 601-1 to 601-n for coding transmission data added. In FIG.11, a pilot signal insertion section 104 inserts pilot signals generated by a pilot signal generation section 103 into the output signal of a digital modulation section 101 as appropriate and outputs to an S/P conversion section 102.

At this time, the pilot signal generation section 103 generates pilot signals having a time-varying pattern in the same cycle as that of the frame. For example, when a frame is constructed of 32 MC-CDMA symbols, a pilot signal string $\{C_1, C_2, C_3, ..., C_{32}\}$ of 32 in length is used for frame synchronization. Each element of the string is assigned to a predetermined subcarrier of each MC-CDMA symbol one at a time and repeated for every one frame.

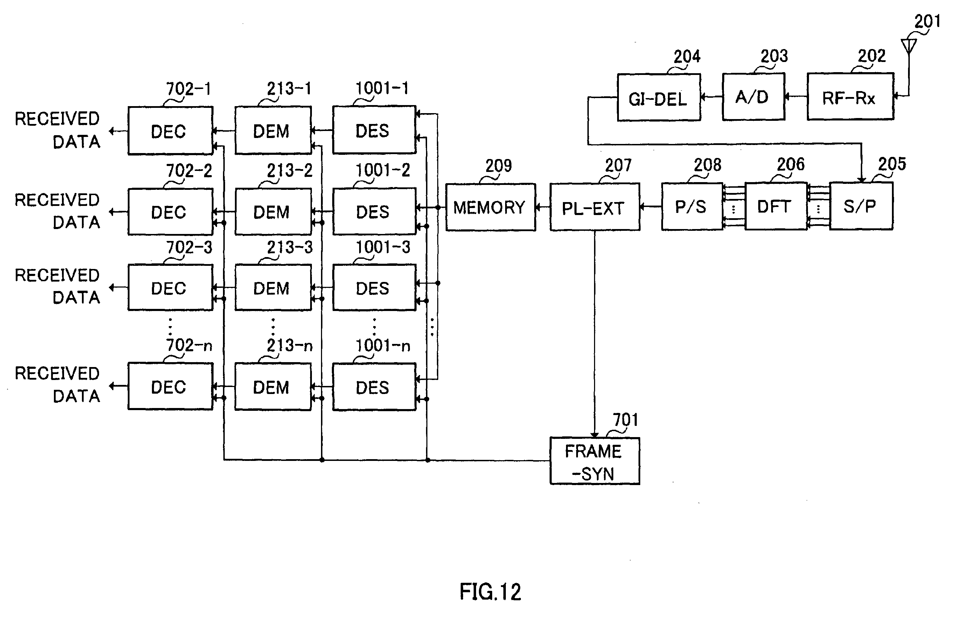

FIG.12 is a block diagram showing a configuration of a reception apparatus according to this embodiment intended to acquire frame synchronization using pilot signals. Compared to FIG.10, the reception apparatus shown in FIG.12 adopts a configuration with a frame synchronization acquisition section 701 and data decoding sections 702-1 to 702-n added. In FIG.12, a P/S conversion section 208 converts the output signal of a DFT section 206, which is a parallel data string to a serial data string and then a pilot signal extraction section 207 extracts pilot signals. Furthermore, for simplicity of explanation, FIG.12 omits a pilot signal decoding section 210, a channel estimation section 211 and a channel compensation section 212.

While shifting a replica signal which is stored inside beforehand by 1 MC-CDMA symbol at a time, the frame synchronization acquisition section 701 calculates a value of correlation with a 1-frame pilot signal extracted by the pilot signal extraction section 207 and identifies the timing at which the correlation value reaches a maximum as the start of the frame. This makes it possible to acquire frame synchronization. Then, the frame synchronization acquisition section 701 outputs a timing signal indicating the start of the frame to despreading sections 1001-1 to 1001-n, the digital demodulation sections 213-1 to 213-n and the data decoding sections 702-1 to 702-n.

The despreading sections 1001-1 to 1001-n decide data break positions based on the timing signal output from the frame synchronization acquisition section 701 and carry out despreading processing on the output signal of a memory 209 using specific spreading codes and output to the corresponding digital demodulation sections 213-1 to 213-n. The digital demodulation sections 213-1 to 213-n decide data break positions based on the timing signal output from the frame synchronization acquisition section 701 and demodulate the output signals of the corresponding despreading sections 1001-1 to 1001-n. The data decoding sections 702-1 to 702-n decide data break positions based on the timing signal output from the frame synchronization acquisition section 701 and decode the output signals of the digital demodulation sections 213-1 to 213-n to obtain received data.

Here, by allowing pilot carriers to carry cell identification signals, this embodiment can support a multi-cell system using the same frequency band. Furthermore, by adopting pattern strings for pilot carrier signal strings, which are orthogonal to one another between neighboring cells, this embodiment can extract pilot signals of the own cell and thereby perform channel estimation more accurately.

Furthermore, by spreading pilot signals also in the frequency direction, this embodiment can perform channel estimation more accurately through spreading gain. Furthermore, this embodiment can also acquire frame synchronization using pilot signals.

As stated above, by carrying out channel estimation and frame synchronization acquisition using a pilot signal string having a time-varying pattern, the present invention can reduce pilot signals to estimate channels and acquire frame synchronization and thereby improve the transmission efficiency. Furthermore, even if pilot signals are sent using subcarriers involving DC components that cannot be used for information transmission, the receiving side can decode the pilot signals without influences of DC offsets, and therefore it is possible to improve the transmission efficiency.

This application is based on the Japanese Patent Application No.2001-199925 filed on June 29, 2001 and the Japanese Patent Application No.2001-388235 filed on December 20, 2001, entire content of which is expressly incorporated by reference herein.

Industrial Applicability

The present invention is preferably used for radio communications based on a multicarrier modulation system such as a modulation system.

**Claims**

1. A multicarrier transmission apparatus comprising:

   pilot signal generating means for generating a pilot signal string having a time-varying pattern; and
   pilot signal inserting means for inserting the pilot signal string divided into a plurality of carriers which are sent in time sequence.

2. The multicarrier transmission apparatus according to claim 1, wherein the pilot signal inserting means allows subcarriers involving DC components to carry the pilot signal string generated by the pilot signal generating means.

3. The multicarrier transmission apparatus according to claim 1, wherein the pilot signal generating means generates said pilot signal string in such a way that the numbers of positive and negative pilot signals making up the pilot signal string are identical within a predetermined range.

4. The multicarrier transmission apparatus according to claim 1, wherein the pilot signal generating means generates pilot signals having a pattern of the same cycle as that a transmission unit.

5. The multicarrier transmission apparatus according to claim 1, wherein data is transmitted according to a multicarrier CDMA system.

6. The multicarrier transmission apparatus according to claim 5, wherein a cell identification signal is transmitted using a pilot carrier.

7. The multicarrier transmission apparatus according to claim 6, wherein pilot carrier signal strings are made orthogonal to one another between neighboring cells.

8. The multicarrier transmission apparatus according to claim 5, wherein pilot signals are spread also in a frequency direction.

9. A multicarrier reception apparatus comprising:

   pilot signal extracting means for extracting pilot signals carried on a pilot carrier; and
   channel estimating means for carrying out channel estimation by correlating a plurality of extracted pilot signals arranged in time sequence with the same pattern as that used on a transmitting side.

10. A multicarrier reception apparatus comprising:

    pilot signal extracting means for extracting pilot signals carried on a pilot carrier;
    frequency offset estimating means for estimating a frequency offset by correlating a plurality of extracted pilot signals arranged in time sequence with the same pattern as that used on a transmitting side; and
    frequency offset compensating means for compensating the frequency offset using the frequency offset estimated value obtained by this frequency offset estimating means.

11. The multicarrier reception apparatus according to claim 10, wherein the frequency offset estimating means further carries out frequency offset estimation on the signal subjected to frequency offset compensation processing.

12. A multicarrier reception apparatus comprising:

    pilot signal extracting means for extracting pilot signals carried on a pilot carrier; and
    synchronization acquiring means for detecting the start position of a transmission unit by correlating a plurality of extracted pilot signals arranged in time sequence with the same pattern as that used on a transmitting side.

13. A multicarrier reception apparatus comprising:

    pilot signal extracting means for extracting pilot signals carried on a pilot carrier; and
    cell identification signal estimating means for estimating a cell identification signal multiplied on a plurality of extracted pilot signals arranged in time sequence.

14. A base station apparatus comprising a multicarrier transmission apparatus, said multicarrier transmission apparatus comprising:

pilot signal generating means for generating a pilot signal string having a time-varying pattern; and
pilot signal insertingmeans for inserting the pilot signal string divided into a plurality of carriers which are sent in time sequence.

15. A communication terminal apparatus comprising a multicarrier transmission apparatus, said multicarrier transmission apparatus comprising:

pilot signal generating means for generating a pilot signal string having a time-varying pattern; and
pilot signal inserting means for inserting the pilot signal string divided into a plurality of carriers which are sent in time sequence.

16. A base station apparatus comprising a multicarrier reception apparatus, said multicarrier reception apparatus comprising:

pilot signal extracting means for extracting pilot signals carried on a pilot carrier; and
channel estimating means for carrying out channel estimation by correlating a plurality of extracted pilot signals arranged in time sequence with the same pattern as that used on a transmitting side.

17. A communication terminal apparatus comprising a multicarrier reception apparatus, said multicarrier reception apparatus comprising:

pilot signal extracting means for extracting pilot signals carried on a pilot carrier; and
channel estimating means for carrying out channel estimation by correlating a plurality of extracted pilot signals arranged in time sequence with the same pattern as that used on a transmitting side.

18. A multicarrier radio communication method comprising the steps of an apparatus on the transmitting side of sending a pilot signal string having a time-varying pattern divided into and carried on a plurality of carriers, and the steps of an apparatus on the receiving side of carrying out channel estimation by correlating the plurality of pilot signals carried on the pilot carriers with the same pattern as that used on the transmitting side.

19. A multicarrier radio communication method comprising the steps of an apparatus on the transmitting side of sending a pilot signal string having a time-varying pattern divided into and carried on a plurality of carriers, and the steps of an apparatus on the receiving side of carrying out frequency offset estimation by correlating the plurality of pilot signals carried on the pilot carriers with the same pattern as that used on the transmitting side.

20. Amulticarrier radio communication method comprising the steps of an apparatus on the transmitting side of sending a pilot signal string having a time-varying pattern divided into and carried on a plurality of carriers, and the steps of an apparatus on the receiving side of detecting the start position of a transmission unit by correlating the plurality of pilot signals carried on the pilot carriers with the same pattern as that used on the transmitting side.

21. A multicarrier radio communication method comprising the steps of an apparatus on the transmitting side of generating a pilot signal string in such a way that the numbers of positive and negative pilot signals making up said pilot signal string are identical within a predetermined range and sending the pilot signals carried on subcarriers involving DC components, and the steps of an apparatus on the receiving side of carrying out channel estimation by correlating the plurality of pilot signals carried on the subcarriers involving said DC components with the same pattern as that used on the transmitting side.

22. Amulticarrier radio communication method comprising the steps of an apparatus on the transmitting side of generating a pilot signal string in such a way that the numbers of positive and negative pilot signals making up said pilot signal string are identical within a predetermined range and sending the pilot signals carried on subcarriers involving DC components, and the steps of an apparatus on the receiving side of carrying out frequency offset estimation by correlating the plurality of pilot signals carried on the subcarriers involving said DC components with the same pattern as that used on the transmitting side.

23. Amulticarrier radio communication method comprising the steps of an apparatus on the transmitting side of generating a pilot signal string in such a way that the numbers of positive and negative pilot signals making up said pilot signal string are identical within a predetermined range and sending the pilot signal string carried on subcarriers involving DC components, and the steps of an apparatus on the receiving side of detecting the start position of a transmission unit by correlating the plurality of pilot signals carried on the subcarriers involving said DC components with the same pattern as that used on a transmitting side.

**24.** The multicarrier radio communication method according to claim 18, wherein the apparatus on the transmitting side carries out data transmission according to a multicarrier CDMA system and multiplies the pilot signals by a cell identification signal, and the apparatus on the receiving side estimates the cell identification signal multiplied on the pilot signals.

FIG.1

FIG.2

FIG.3

FIG.4

FIG.5

FIG.6

FIG.7

EP 1 401 133 A1

FIG.8

FIG.9

110

109 RF-Tx

108 D/A

107 GI-INS

106 P/S

105 IDFT

104 PL-INS

103 PL-GEN

102 S/P

902 Σ

901-1 SPR

901-2 SPR

901-3 SPR

901-n SPR

101-1 MOD

101-2 MOD

101-3 MOD

101-n MOD

TRANSMISSION DATA

TRANSMISSION DATA

TRANSMISSION DATA

TRANSMISSION DATA

FIG.10

EP 1 401 133 A1

EP 1 401 133 A1

FIG.11

EP 1 401 133 A1

RECEIVED DATA ← | DEC | 702-1 | DEM | 213-1 | DES | 1001-1

RECEIVED DATA ← | DEC | 702-2 | DEM | 213-2 | DES | 1001-2

RECEIVED DATA ← | DEC | 702-3 | DEM | 213-3 | DES | 1001-3

RECEIVED DATA ← | DEC | 702-n | DEM | 213-n | DES | 1001-n

MEMORY 209

PL-EXT 207

P/S 208

DFT 206

S/P 205

GI-DEL 204

A/D 203

RF-Rx 202

201

FRAME -SYN 701

FIG.12

## INTERNATIONAL SEARCH REPORT

| | International application No. |
|---|---|
| | PCT/JP02/06535 |

**A. CLASSIFICATION OF SUBJECT MATTER**
Int.Cl⁷ H04J11/00, H04B1/707

According to International Patent Classification (IPC) or to both national classification and IPC

**B. FIELDS SEARCHED**

Minimum documentation searched (classification system followed by classification symbols)
Int.Cl⁷ H04J11/00, H04B1/707

Documentation searched other than minimum documentation to the extent that such documents are included in the fields searched
Jitsuyo Shinan Koho          1926-1996   Toroku Jitsuyo Shinan Koho   1994-2002
Kokai Jitsuyo Shinan Koho   1971-2002   Jitsuyo Shinan Toroku Koho   1996-2002

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 10-28077 A (Takuro SATO, Soichi WATANABE, Takeo ABE), | 1,3-5,9,12, 14-18,20 |
| Y | 27 January, 1998 (27.01.98), Page 2, right column, lines 40 to 44 Page 3, right column, lines 13 to 16 (Family: none) | 2,6-8,10, 11,13,19, 21-24 |
| Y | JP 11-8600 A (Hitachi Denshi, Ltd.), 12 January, 1999 (12.01.99), Page 4, left column, lines 24 to 31 (Family: none) | 2,21,22,23 |
| Y | JP 10-178415 A (Kabushiki Kaisha YRP Ido Tsushin Kiban Gijutsu Kenkyusho), 30 June, 1998 (30.06.98), Page 3, right column, lines 32 to 37 (Family: none) | 6,7,8,13,24 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 September, 2002 (27.09.02) | 08 October, 2002 (08.10.02) |

| Name and mailing address of the ISA/ Japanese Patent Office | Authorized officer |
|---|---|
| Facsimile No. | Telephone No. |

Form PCT/ISA/210 (second sheet) (July 1998)

**INTERNATIONAL SEARCH REPORT**

International application No.

PCT/JP02/06535

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 2001-516990 A (Qualcomm, Inc.),<br>02 October, 2001 (02.10.01),<br>Claim 31; page 13, lines 1 to 3<br>& WO 99/13605 A1 & EP 1013020 A1<br>& US 20020031082 A1 & US 6285655 B1<br>& AU 9894755 A & NO 200001153 A<br>& FI 200000274 A & BR 9812281 A<br>& CZ 200000828 A3 & TW 392396 A<br>& CN 1273720 A & HU 200003800 A2<br>& ZA 9808164 A & KR 2001023784 A | 7 |
| Y | JP 2001-144724 A (Matsushita Electric Industrial Co., Ltd.),<br>25 May, 2001 (25.05.01),<br>Page 5, left column, lines 25 to 45<br>(Family: none) | 8 |
| Y | JP 11-4209 A (Hitachi Denshi, Ltd.),<br>06 January, 1999 (06.01.99),<br>Fig. 1<br>(Family: none) | 10,11,19 |

Form PCT/ISA/210 (continuation of second sheet) (July 1998)

## INTERNATIONAL SEARCH REPORT

| International application No. |
| --- |
| PCT/JP02/06535 |

| **Box I   Observations where certain claims were found unsearchable (Continuation of item 1 of first sheet)** |
| --- |

This international search report has not been established in respect of certain claims under Article 17(2)(a) for the following reasons:

1. ☐ Claims Nos.:
     because they relate to subject matter not required to be searched by this Authority, namely:

2. ☐ Claims Nos.:
     because they relate to parts of the international application that do not comply with the prescribed requirements to such an extent that no meaningful international search can be carried out, specifically:

3. ☐ Claims Nos.:
     because they are dependent claims and are not drafted in accordance with the second and third sentences of Rule 6.4(a).

| **Box II   Observations where unity of invention is lacking (Continuation of item 2 of first sheet)** |
| --- |

This International Searching Authority found multiple inventions in this international application, as follows:

Claim 2 is directed to a technique of improving transmission efficiency by transmitting a pilot signal with a subcarrier having a DC component.
Claims 9 to 11, 16-19 are directed to a technique of identifying the line by using a pilot signal by inference.
Claims 12, 20 are directed to a technique of determining the start position of a transmission unit by using a pilot signal.
Claims 6, 7, 13 are directed to a technique for adaptation to a multi-cell system by including a signal for identifying a cell into a pilot signal.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐ The additional search fees were accompanied by the applicant's protest.

☐ No protest accompanied the payment of additional search fees.

Form PCT/ISA/210 (continuation of first sheet (1)) (July 1998)